# EUROPÄISCHE PATENTANMELDUNG

(11) **EP 1 093 067 A2**
(43) Veröffentlichungstag der Anmeldung: **18.04.2001**
(21) Anmeldenummer: 00122002.9
(22) Anmeldetag: 10.10.2000
(51) Int. Cl.: G06F 17/60

(54) **Verfahren und Vorrichtung für die Abwicklung einer telefonischen Bestellung unter Einsatz eines Sprachdialogsystems**

(30) Priorität: 14.10.1999 DE 19949560
(71) Anmelder: MESSER GRIESHEIM GMBH, 60547 Frankfurt (DE)
(72) Erfinder: Walter, Joachim, 47167 Duisburg (DE); Breuer, Hans Josef, 45289 Essen (DE)

(57) **Zusammenfassung**

Es ist ein Verfahren für die Abwicklung einer telefonischen Bestellung eines Produkts unter Einsatz eines Sprachdialogsystems bekannt, bei dem ein mit dem Sprachdialogsystem telefonisch verbundener Besteller mündliche Angaben zu einer Bestellung macht, die Angaben mittels des Sprachdialogsystems erfaßt und mittels eines Ausgabegerätes ausgegeben werden. Um hiervon ausgehend die Aufnahme und Abwicklung von Bestellaufträgen hinsichtlich Kundenfreundlichkeit und Betriebssicherheit weiter zu optimieren, wird erfindungsgemäß vorgeschlagen, daß das Sprachdialogsystem (1) eine Spracherkennungseinrichtung (2) umfaßt, mittels der die mündlichen Angaben in digitale Bestellungsdaten umgesetzt werden und daß die Bestellungsdaten einem elektrischen Computerdrucker (5) zugeführt und ausgedruckt werden. Eine zur Durchführung des Verfahrens geeignete Vorrichtung, zeichnet sich dadurch aus daß ein Sprachdialogsystem (1) vorgesehen ist, das eine Spracherkennungseinrichtung (2) für die Umsetzung mündlicher Angaben in digitale Bestellungsdaten umfaßt, und das mit einem Computerdrucker (5) für das Ausdrucken der Bestellungsdaten verbunden ist.

## Beschreibung

Die Erfindung betrifft ein Verfahren für die Abwicklung einer telefonischen Bestellung eines Produkts unter Einsatz eines Sprachdialogsystems, indem ein mit dem Sprachdialogsystem telefonisch verbundener Besteller mündliche Angaben zu einer Bestellung macht, die Angaben mittels des Sprachdialogsystems erfaßt und mittels eines Ausgabegerätes ausgegeben werden.

Weiterhin betrifft die Erfindung eine Vorrichtung zur Durchführung des Verfahrens, mit einem telefonisch anwählbaren Sprachdialogsystems zur Erfassung mündlicher Angaben zu einer Bestellung, und mit einem Ausgabegerät zur Ausgabe der Angaben.

Die Bestellungsaufnahme unter Einsatz eines telefonischen Sprachdialogsystems ist allgemein bekannt. Dabei führt eine elektronische Stimme den Besteller durch die Bestellaufnahme. Die vom Besteller dabei gemachten mündlichen Angaben werden gespeichert und sind dann abrufbar oder sie werden auf einem Sprachausgabegerät wiedergegeben.

Der Erfindung liegt die Aufgabe zugrunde, die Aufnahme und Abwicklung von Bestellaufträgen hinsichtlich Kundenfreundlichkeit und Betriebssicherheit weiter zu optimieren.

Hinsichtlich des Verfahrens wird diese Aufgabe ausgehend von dem eingangs genannten Verfahren erfindungsgemäß dadurch gelöst, daß das Sprachdialogsystem eine Spracherkennungseinrichtung umfaßt, mittels der die mündlichen Angaben in digitale Bestellungsdaten umgesetzt werden und daß die Bestellungsdaten einem Computerdrucker zugeführt und ausgedruckt werden.

Ein mit dem Sprachdialogsystem telefonisch verbundener Besteller wird von einer elektronischen Stimme Punkt für Punkt durch die Bestellaufnahme geführt. Die dabei vom Besteller mündlich gemachten Angaben zur Bestellung betreffen beispielsweise eine Kundennummer, Art und Menge des gewünschten Produkts und einen Liefertermin. Diese Angaben werden einer Spracherkennungseinrichtung zugeführt, mittels der die analogen Sprachsignale in digitale Bestelldaten umgesetzt werden. Derartige digitalen Daten lassen sich datentechnisch leicht erfassen, speichern und auswerten. Insbesondere kann dadurch eine schriftliche Fassung der mündlich gemachten Angaben erstellt werden. Erfindungsgemäß umfaßt das Auswerten der Bestelldaten daher ein automatisches Ausdrucken der Bestelldaten mittels eines Computerdruckers. Dadurch ist jeder Bestellvorgang schriftlich dokumentiert und kann genau nachvollzogen werden. Dadurch, daß der Bestellvorgang vollkommen automatisiert abläuft und einschließlich der schriftlichen Niederlegung der Bestelldaten ohne menschliches Zutun erfolgt, , werden Fehler durch Irrtum, Vergessen oder Versehen (Hör- und Schreibfehler) vermieden, so daß eine exakte und fristgerechte Abwicklung der Bestellung sichergestellt ist.

Eine weitere Verbesserung ergibt sich dadurch, daß das Sprachdialogsystem mit einer Speichereinheit verbunden ist, in der spezifische Kundendaten gespeichert sind, und daß die Bestellungsdaten mit den Kundendaten unmittelbar mittels eines Rechners abgeglichen werden. Die Angaben des Bestellers werden dabei bereits während der Bestellaufnahme mit den in der Speichereinheit gespeicherten Kundendaten abgeglichen, so daß der Besteller unmittelbar auf Fehler hingewiesen werden kann. Dadurch ergibt sich eine höhere Fehlerresistenz des Verfahrens. Bei den spezifischen Kundendaten handelt es sich zum Beispiel um den Kundennamen, eine Kundennummer, die Lieferanschrift, Telefon- und Telefaxnummer und Informationen zu Installationen, die beim Kunden vorhanden sind, wie etwa Nummer und Art von Flüssiggas-Behältern.

In dieser Hinsicht hat es sich auch bewährt, die Bestellungsdaten mittels des Rechners um eine Bestellnummer zu ergänzen. Anhand der Bestellnummer lassen sich die Bestellungen eindeutig kennzeichnen und zuordnen, so daß fehlerhafte Abwicklungen vermieden werden und jeder Bestellvorgang exakt nachvollzogen werden kann.

Das erfindungsgemäße Verfahren hat sich besonders für die Aufnahme und Abwicklung von Bestellvorgängen bewährt, bei denen das Produkt Flüssiggas ist. Darunter wird hier tiefgekühltes, verflüssigtes Gas verstanden.

Hinsichtlich der Vorrichtung wird die oben angegebene Aufgabe ausgehend von der eingangs genannten Vorrichtung erfindungsgemäß dadurch gelöst, daß das Sprachdialogsystem eine Spracherkennungseinrichtung für die Umsetzung der mündlichen Angaben in digitale Bestellungsdaten umfaßt und mit einem Computerdrucker für das Ausdrucken der Bestellungsdaten verbunden ist.

Dadurch, daß das Sprachdialogsystem eine Spracherkennungseinrichtung umfaßt, können die vom Besteller mündlich gemachten Angaben zur Bestellung, beispielsweise eine Kundennummer oder ein Liefertermin, in digitale Bestelldaten umgesetzt werden. Derartige digitale Daten lassen sich datentechnisch leicht erfassen, speichern und auswerten. Dadurch, daß das Sprachdialogsystem mit einem Computerdrucker verbunden ist, können die von der Spracherkennungseinrichtung ermittelten digitalen Bestellungsdaten als Schriftstück ausgefertigt und der Bestellvorgang aufgrund des Schriftstückes dokumentiert, archiviert und abgewickelt werden. Da die erfindungsgemäße Vorrichtung eine Automatisierung des Bestellvorganges erlaubt, so daß dieser einschließlich der schriftlichen Niederlegung der Bestelldaten ohne menschliches Zutun erfolgen kann, werden Fehler durch Irrtum, Vergessen oder Versehen (Hör- und Schreibfehler) vermieden, so daß eine exakte und fristgerechte Abwicklung der Bestellung gewährleistet ist.

Eine weitere Verbesserung ergibt sich dadurch, daß das Sprachdialogsystem einen Rechner für einen Abgleich der Bestellungsdaten mit spezifischen Kundendaten umfaßt, die in einer mit dem Rechner verbundenen Speichereinheit gespeichert sind. Durch den Abgleich mittels des Rechners können die Angaben des Bestellers bereits während der Bestellaufnahme mit den in der Speichereinheit gespeicherten Kundendaten abgeglichen und der Besteller unmittelbar auf Fehler hingewiesen werden. Bei den spezifischen Kundendaten handelt es sich zum Beispiel um den Kundennamen, eine Kundennummer, die Lieferanschrift, Telefon- und Telefaxnummer und Informationen zu Installationen, die beim Kunden vorhanden sind, wie etwa Nummer und Art von Flüssiggas-Behältern.

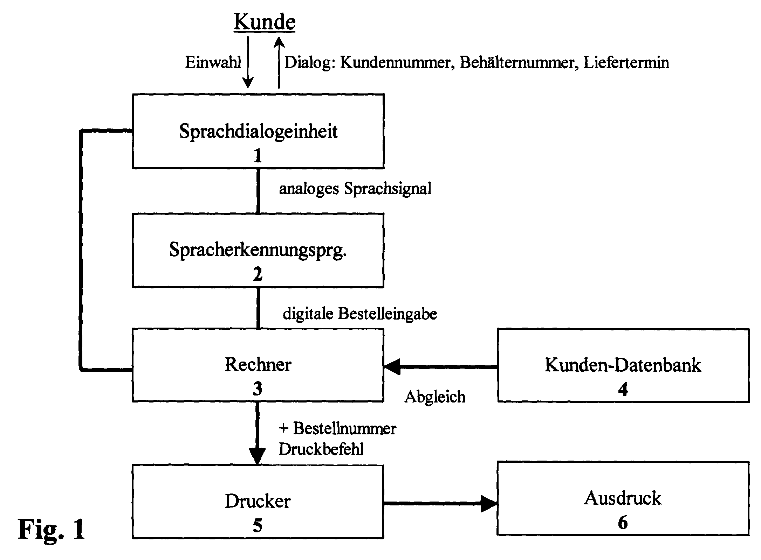

Nachfolgend wird die Erfindung anhand eines Ausführungsbeispiels und einer Zeichnung näher erläutert. Als einzige Figur der Zeichnung zeigt
- **Figur 1**: einen Datenflußplan mit einer zeitlichen Abfolge von Vorgängen bei der Aufnahme und Abwicklung einer Flüssiggas-Bestellung.

Figur 1 zeigt schematisch den Verfahrensablauf bei einer Bestellung von Flüssiggas (zum Beispiel verflüssigtem Sauerstoff oder Stickstoff) durch einen Kunden, der über einen geeigneten Behälter zur Aufnahme des Flüssiggases verfügt. Gleichzeitig ist in Figur 1 eine Ausführungsform der erfindungsgemäßen Vorrichtung dargestellt, wobei die einzelnen Bestandteile (1 bis 5) der Vorrichtung durch eine Umrandung hervorgehoben und ihre physikalischen Verbindungen untereinander anhand durchgezogener Verbindungslinien schematisch gekennzeichnet sind.

Das Sprachdialogsystem umfaßt im Ausführungsbeispiel eine Sprachdialogeinheit 1, ein Spracherkennungsprogramm 2 und einen Rechner 3. Nach der telefonischen Einwahl bei der Sprachdialogeinheit 1 wird der Kunde von einer elektronischen Stimme nach seiner Kundennummer, der Behälternummer und dem gewünschten Liefertermin gefragt. Während der Kunde die abgefragten Informationen mündlich eingibt, werden die so erhaltenen Sprachsignale mittels eines handelsüblichen Spracherkennungsprogramms 2 ( 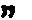 Creavoice" der Firma Crealog) ausgewertet und als digitale Bestelleingabe einem Rechner 3 übertragen. Dieser vergleicht die Bestelleingabe mit den für diesen Kunden in einer Kunden-Datenbank 4 enthaltenen spezifischen Kundendaten. Dabei handelt es sich um den Kundennamen, eine Kundennummer, die Lieferanschrift, Telefon- und Telefaxnummer und Informationen zu dem beim Kunden aufgestellten Behälter und die Flüssiggasart. Für den Fall einer Unstimmigkeit zwischen Kundendaten und Bestelleingabe wird der Kunde durch die Sprachdialogeinheit 1 auf den Fehler hingewiesen und um Klarstellung oder Korrektur gebeten. Gegebenenfalls werden die korrigierten Daten mittels des Spracherkennungsprogramms 2 als korrigierte digitale Bestelleingabe dem Rechner 3 übertragen. Im Fall der Konsistenz von Bestelleingabe und Kundendaten wiederholt die Sprachdialogeinheit 1 die vom Kunden gemachten Angaben. Nach Bestätigung durch den Kunden wird die Bestellung angenommen. Die entsprechende Datei mit den Bestelldaten wird mittels des Rechners 3 automatisch um eine fortlaufende Bestellnummer ergänzt und ein Druckbefehl an einen Drucker 5 zum Ausdruck der Datei gegeben. Auf Grundlage dieses vollautomatisch erhaltenen Ausdrucks 6 wird die Bestellung weiter abgewickelt. Anschließend wird die Kunden-Datenbank unter Berücksichtigung der Bestellung aktualisiert.

## Patentansprüche

1. Verfahren für die Abwicklung einer telefonischen Bestellung eines Produkts unter Einsatz eines Sprachdialogsystems, indem ein mit dem Sprachdialogsystem telefonisch verbundener Besteller mündliche Angaben zu einer Bestellung macht, die Angaben mittels des Sprachdialogsystems erfaßt und mittels eines Ausgabegerätes ausgegeben werden, dadurch gekennzeichnet, daß das Sprachdialogsystem (1) eine Spracherkennungseinrichtung (2) umfaßt, mittels der die mündlichen Angaben in digitale Bestellungsdaten umgesetzt werden und daß die Bestellungsdaten einem elektrischen Computerdrucker (5) zugeführt und ausgedruckt werden.

2. Verfahren nach Anspruch 1, dadurch gekennzeichnet, daß das Sprachdialogsystem (1) mit einer Speichereinheit (4) verbunden ist, in der spezifische Kundendaten gespeichert sind, und daß die Bestellungsdaten mit den Kundendaten unmittelbar mittels einer Rechners (3) abgeglichen werden.

3. Verfahren nach Anspruch 2, dadurch gekennzeichnet, daß die Bestellungsdaten mittels des Rechners (3) um eine Bestellnummer ergänzt werden.

4. Verfahren nach einem der vorhergehenden Ansprüche, dadurch gekennzeichnet, daß das Produkt Flüssiggas ist.

5. Vorrichtung zur Durchführung des Verfahrens nach einem der Ansprüche 1 bis 4, mit einem telefonisch anwählbaren Sprachdialogsystems zur Erfassung mündlicher Angaben zu einer Bestellung, und mit einem Ausgabegerät zur Ausgabe der Angaben, dadurch gekennzeichnet, daß das Sprachdialogsystem (1) eine Spracherkennungseinrichtung (2) für die Umsetzung der mündlichen Angaben in digitale Bestellungsdaten umfaßt und mit einem Computerdrucker (5) für das Ausdrucken der Bestellungsdaten verbunden ist.

6. Vorrichtung nach Anspruch 5, dadurch gekennzeichnet, daß das Sprachdialogsystem (1) einen Rechner (2) für einen Abgleich der Bestellungsdaten mit spezifischen Kundendaten umfaßt, die in einer mit dem Rechner verbundenen Speichereinheit (4) gespeichert sind.
